# EUROPÄISCHE PATENTSCHRIFT

(11) **EP 1 176 347 B1**
(45) Veröffentlichungstag und Bekanntmachung des Hinweises auf die Patenterteilung: **07.07.2004**
(21) Anmeldenummer: 01115241.0
(22) Anmeldetag: 23.06.2001
(51) Int. Cl.: F16K 31/14, F16K 31/44, F16K 15/14, F15B 13/10, F15B 13/04

(54) **Handbetätigungseinrichtung für Ventile**
Manually operated actuating device for valves
Dispositif de commande manuelle pour actionner des soupapes

(30) Priorität: 28.07.2000 DE 20013052 U
(43) Veröffentlichungstag der Anmeldung: 30.01.2002
(73) Patentinhaber: FESTO AG & Co, 73734 Esslingen (DE)
(72) Erfinder: Burkhardt, Werner, 73734 Esslingen (DE)
(74) Vertreter: Abel, Martin, Dipl.-Ing.

(56) Entgegenhaltungen:
- US-A- 3 952 774
- US-A- 4 611 631
- US-A- 5 860 450

## Beschreibung

Die Erfindung betrifft eine Handbetätigungseinrichtung zur manuelle Not- und/oder Hilfsbetätigung eines üblicherweise elektrisch oder pneumatisch betätigbaren Ventils, mit einem im gebrauchsbereiten Zustand im Bereich einer Gehäuseausnehmung des Ventils unter Abdichtung derart fixierten Handbetätigungsglied, dass seine Innenseite ins Innere der Gehäuseausnehmung weist und seine Außenseite zum Aufbringen einer manuellen Betätigungskraft zugänglich ist.

Eine derartige Handbetätigungseinrichtung geht aus der EP 0 185 168 B1 hervor. Bei dieser bekannten Bauform ist ein stößelartiges Handbetätigungsglied in einer Gehäuseausnehmung unverlierbar fixiert, wobei die Gehäuseausnehmung mit einem ein bewegliches Ventilglied enthaltenden Aufnahmeraum in Verbindung steht. Das Ventilglied wird im normalen Betrieb des Ventils elektrisch und dabei vorzugsweise elektromagnetisch aktiviert. In Notfällen oder zu Testzwecken kann das Ventilglied jedoch auch manuell aktiviert werden, indem von außen her eine manuelle Betätigungskraft auf das Handbetätigungsglied ausgeübt wird, das daraufhin verlagert wird und auf das Ventilglied einwirkt. Damit das vom Ventilglied gesteuerte Druckmedium nicht unkontrolliert aus dem Ventil austritt, ist das Handbetätigungsglied unter Abdichtung in der Gehäuseausnehmung fixiert.

Weitere Bauformen von Handbetätigungseinrichtungen gehen beispielsweise aus der DE 42 24 942 A1, aus der DE 198 01 201 A1 und aus der DE 42 03 164 A1 hervor.

Unabhängig vom Vorhandensein einer Handbetätigungseinrichtung tritt bei zur Steuerung eines gasförmigen Mediums wie Druckluft dienenden Ventilen die Problematik auf, dass sich ein gewisser Anteil des zu steuernden Druckmediums aufgrund von Leckage unkontrolliert im Innern des Ventils verteilt und zu Überdrücken führt, die die Funktionsweise des Ventils beeinträchtigen können. Aufgabe der vorliegenden Erfindung ist es, derartige Überdruckprobleme zu vermeiden und gleichzeitig die internen Bestandteile der Ventile vor Fremdpartikeln wie Feuchtigkeit und Verschmutzung zu schützen.

Gelöst wird diese Aufgabe mit einer Handbetätigungseinrichtung der eingangs genannten Art, die sich dadurch auszeichnet, dass das Handbetätigungsglied mit Entlüftungsmitteln versehen ist, die zur Vermeidung eines in der Gehäuseausnehmung leckagebedingt auftretenden Überdruckaufbaues eine Luftströmung von seiner Innenseite zu seiner Außenseite ermöglichen und die in der Gegenrichtung das Eindringen nicht-gasförmiger Fremdpartikel verhindern.

Auf diese Weise liegt eine Handbetätigungseinrichtung vor, deren Handbetätigungsglied gleichzeitig eine Mehrzahl von Funktionen übernimmt. Zum einen dient es zur manuellen Hilfsoder Notbetätigung des mit der Handbetätigungseinrichtung ausgestatteten Ventils. Zum anderen übernimmt es eine Deckeloder Verschlussfunktion zum dichten Verschließen der zugeordneten Gehäuseausnehmung, so dass nicht-gasförmige Fremdpartikel wie Schmutz und Feuchtigkeit an einem Eintritt in das Ventil gehindert werden. Des Weiteren übernimmt es eine Entlüftungsfunktion hinsichtlich der zugeordneten Gehäuseausnehmung und der mit dieser in Verbindung stehenden Bereiche des Ventils und verhindert somit einen durch Leckage hervorgerufenen unerwünschten Druckaufbau im Ventilinnern. Dies alles wird erreicht mit einer sehr geringen Bauteileanzahl, geringem Platzbedarf und reduzierten Kosten.

Zwar wäre es möglich, die Entlüftung des Ventilinnern durch eigenständige Entlüftungskanäle vorzunehmen, denen Filter zugeordnet werden, die das Eindringen von Schmutz und Feuchtigkeit verhindern. Der damit verbundene konstruktive und herstellungstechnische Aufwand ist allerdings relativ groß, zumal die gewünschte Handbetätigungseinrichtung zusätzlich in eigenständiger Bauform realisiert werden muss.

Vorteilhafte Weiterbildungen der Erfindung gehen aus den Unteransprüchen hervor.

Das Handbetätigungsglied verfügt zweckmäßigerweise über einen zur Fixierung am zugehörigen Ventil dienenden Halteabschnitt und einen relativ zum Halteabschnitt manuell bewegbaren Betätigungsabschnitt, wobei zwischen dem Halteabschnitt und dem Betätigungsabschnitt eine federelastische Verbindung vorgesehen ist. Der Halteabschnitt ist hierbei insbesondere ringförmig ausgebildet und umschließt den zentral plazierten Betätigungsabschnitt koaxial, wobei sich zwischen den beiden Abschnitten in vorzugsweise wiederum koaxialer Anordnung ein federeleastischer Verbindungsabschnitt erstreckt, der eine kegelmantelförmige Gestalt hat und eine zur Außenseite hin offene trichterartige Vertiefung begrenzt. Diese trichterähnliche Vertiefung eignet sich besonders gut zum Ansetzen eines die manuelle Betätigungskraft auferlegenden Drückwerkzeuges.

Bevorzugt ist die federelastische Verbindung zwischen dem Halteabschnitt und dem Betätigungsabschnitt gummielastisch ausgebildet und besteht aus Material mit gummielastischen Eigenschaften, insbesondere aus einem Elastomermaterial oder aus Gummi. Besonders vorteilhaft ist in diesem Zusammenhang eine Handbetätigungseinrichtung, deren Handbetätigungsglied als einstückiger gummielastischer Körper ausgebildet ist. Jedenfalls erspart man sich bei der gummielastischen Ausbildung zumindest des Verbindungsabschnittes die zusätzliche Verwendung einer mechanischen Rückstellfeder und hat somit die Möglichkeit zu einer besonders kostengünstigen Herstellung.

Das Handbetätigungsglied kann mit seinem ringförmigen Halteabschnitt zur Preßsitzbefestigung in der Gehäuseausnehmung des zugeordneten Ventils vorgesehen sein. Zusätzlich oder alternativ kann auch eine formschlüssige Fixierung erfolgen, wobei der Halteabschnitt am Außenumfang abgestuft sein kann, so dass sich eine ringförmige umlaufende Haltestufe ergibt, die mit einer Abstufung in der Gehäuseausnehmung des zugeordneten Ventils zusammenwirken kann. Besteht der ringförmige Halteabschnitt aus einem gummielastischen Material, lässt sich ohne zusätzliche Abdichtungsmaßnahmen eine abgedichtete Fixierung am Ventil realisieren.

Die Entlüftungsmittel können besonders einfach dadurch realisiert werden, dass man sie in Gestalt mindestens eines Rückschlagventils ausbildet, das eine überdruckbedingte Luftströmung von der Innenseite zur Außenseite des Handbetätigungsgliedes zulässt, eine Luftströmung in der Gegenrichtung jedoch verhindert. Mit dem Verhindern einer Luftströmung in der Gegenrichtung wird gleichzeitig auch das Eindringen nicht-gasförmiger Fremdpartikel ausgeschlossen.

Das Rückschlagventil ist zweckmäßigerweise in einem gummielastischen Materialbereich des Handbetätigungsgliedes ausgebildet, wobei es sich insbesondere um einen einstückigen Bestandteil des Handbetätigungsgliedes handelt. Eine derartige Bauform ist vor allem dann vorteilhaft, wenn das Handbetätigungsglied als einstückiger Elastikkörper ausgebildet ist. Zur Bildung des Rückschlagventils kann das Handbetätigungsglied in einem gummielastischen Materialbereich geschlitzt sein, so dass sich eine Durchbrechung ergibt, die von dicht aneinander anliegenden Dichtflächen begrenzt ist, welche sich bei im Bereich der Innenseite des Handbetätigungsgliedes auftretendem Überdruck zur Freigabe der Durchbrechung auseinander spreizen können und die sich nach Herstellung eines Druckausgleiches selbsttätig wieder mit einer Dichtkraft aneinander anlegen können.

Bei einer alternativen Bauform werden die Entlüftungsmittel durch feinporiges Material definiert, beispielsweise ein sintermaterial, wobei die Porengröße derart minimal ist, dass zwar Leckageluft von innen nach außen abströmen kann, flüssige und feste Fremdpartikel jedoch an einem Eintreten von außen nach innen gehindert werden. Auch auf diese Weise ist es möglich, die bei Ventilen übliche Schutzart IP 65 einzuhalten.

Nachfolgend wird die Erfindung anhand der beiliegenden Zeichnung näher erläutert. In dieser zeigen:
- Figur 1: ein üblicherweise elektrisch betätigbares Ventil, teilweise im Längsschnitt, welches mit einer bevorzugten Ausführungsform der Handbetätigungseinrichtung ausgestattet ist, wobei das Handbetätigungsglied im unbetätigten Zustand abgebildet ist und strichpunktiert ein betätigter Zustand verdeutlicht wird,
- Figur 2: einen sich auf die Handbetätigungseinrichtung beziehenden Ausschnitt aus der Anordnung der Figur 1, wobei im Vergleich zur Figur 1 die als Rückschlagventil ausgeführten Entlüftungsmittel in einem Moment der Entlüftung gezeigt sind, und
- Figur 3: das Handbetätigungsglied aus Figuren 1 und 2 in Einzeldarstellung in einer Stirnansicht mit Blickrichtung gemäß III aus Figur 2.

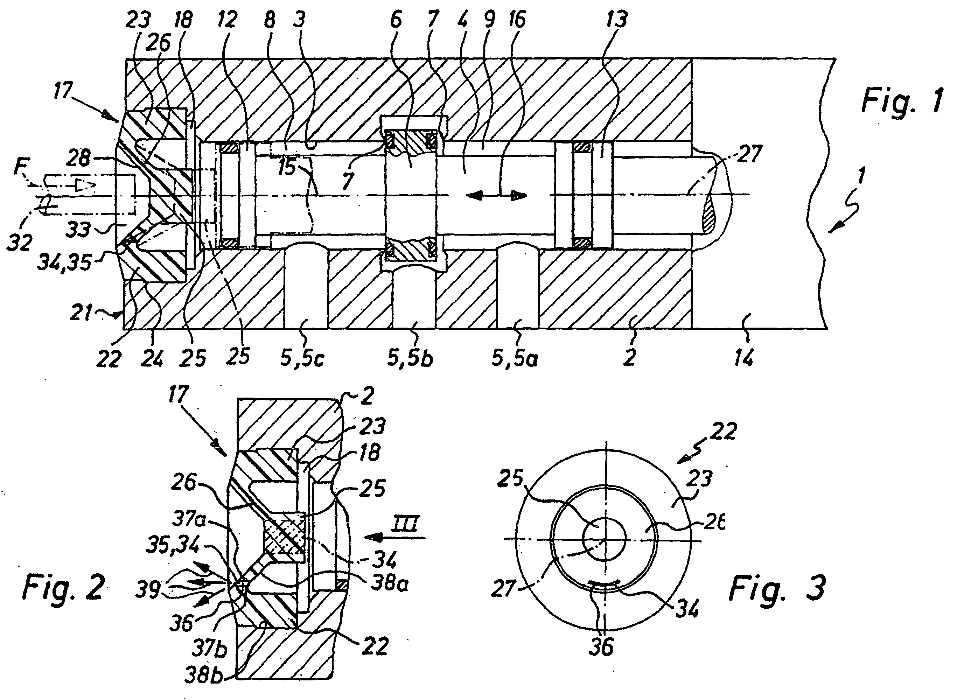

Die Figur 1 zeigt exemplarisch und stark schematisiert ein zur Steuerung von Druckmedium dienendes Ventil 1, wobei das zu steuernde Druckmedium ein Gas und insbesondere Druckluft ist.

Das Ventil 1 hat ein Ventilgehäuse 2, in dem sich ein vorzugsweise länglicher Aufnahmeraum 3 befindet, der ein längliches Ventilglied 4 enthält.

In den Aufnahmeraum 3 münden umfangsseitig mehrere Ventilkanäle 5, die andererseits jeweils zu einer Außenfläche des Ventilgehäuses 2 ausmünden.

Das Ventil 1 des Ausführungsbeispiels ist ein 3/2-Wegeventil, wobei ein Ventilkanal 5 als Speisekanal 5a ausgebildet ist, während zwei weitere Ventilkanäle 5 einen Arbeitskanal 5b und einen Entlüftungskanal 5c darstellen. Der Arbeitskanal 5b mündet axial zwischen den beiden anderen Kanälen 5a, 5c in den Arbeitsraum 3 ein.

Das Ventilglied 4 enthält einen Steuerabschnitt 6 größeren Durchmessers, dem auf beiden Axialseiten jeweils ein ringförmiger Ventilsitz 7 gegenüberliegt, der jeweils den Eingangsbereich zu einem sich axial anschließenden, das Ventilglied 4 ringförmig umschließenden Ventilraum 8, 9 definiert, der jeweils von einem Bestandteil des Aufnahmeraumes 3 gebildet ist. Während der Arbeitskanal 5b in den den Steuerabschnitt 6 enthaltenden Teilraum des Aufnahmeraumes 3 mündet, kommunizieren der Speisekanal 5a und der Entlüftungskanal 5c mit jeweils einem der beiden Ventilräume 8, 9. Auf der dem Steuerabschnitt 6 entgegengesetzten Seite sind die Ventilräume 8, 9 durch Verschluss-Abschnitte 12, 13 des Ventilgliedes 4 abgesperrt, die dichtend mit der Innenfläche des Aufnahmeraumes 3 zusammenarbeiten.

Das Ventil 1 ist mit einer Betätigungseinrichtung 14 ausgestattet, die üblicherweise eine elektrische Betätigung des Ventils 1 ermöglicht. Sie ist beim Ausführungsbeispiel an einer Stirnseite des Ventilgehäuses 2 angebracht und als elektromagnetische Betätigungseinrichtung ausgebildet, die mindestens einen Elektromagneten enthält, der in der Lage ist, das Ventilglied 4 in Richtung der Längsachse 15 des Aufnahmeraumes 3 hin und her zu verlagern. Diese als Schaltbewegung bezeichnete Bewegung ist durch Doppelpfeil 16 angedeutet.

Anstelle der elektrischen Betätigungseinrichtung 14 könnte auch eine beliebige andere, durch Fremdenergie betriebene Betätigungseinrichtung vorgesehen sein, beispielsweise eine pneumatisch arbeitende Betätigungseinrichtung.

Im Rahmen der Schaltbewegung 16 kann das Ventilglied 4 beim Ausführungsbeispiel zwischen zwei Schaltstellungen verlagert werden, in denen es mit seinem Steuerabschnitt 6 am jeweils einen Ventilsitz 7 anliegt und gleichzeitig vom jeweils anderen Ventilsitz abgehoben ist. Dadurch wird entweder eine Verbindung zwischen dem Speisekanal 5a und dem Arbeitskanal 5b bei gleichzeitiger Abtrennung des Entlüftungskanals 5c hergestellt, oder es wird eine Verbindung geschaffen zwischen dem Arbeitskanal 5b und dem Entlüftungskanal 5c bei gleichzeitigem Absperren des Speisekanals 5a.

Bei der Inbetriebnahme, im Zusammenhang mit Wartungsarbeiten, bei Störungen in der Energieversorgung oder vergleichbaren Fällen kann die Notwendigkeit bestehen, das Ventilglied 4 manuell zu betätigen. Man kann hier von einer manuellen Notund/oder Hilfsbetätigung des üblicherweise elektrisch oder pneumatisch betätigten Ventils sprechen. Ermöglicht wird dies durch eine Ausstattung des Ventils 1 mit einer Handbetätigungseinrichtung 17.

Die Handbetätigungseinrichtung 17 enthält ein im gebrauchsbereiten Zustand im Bereich einer Gehäuseausnehmung 18 des Ventilgehäuses 2 des Ventils 1 unter Abdichtung fixiertes Handbetätigungsglied 22. Die Gehäuseausnehmung 18 ist beim Ausführungsbeispiel von dem der Betätigungseinrichtung 14 entgegengesetzten axialen Endabschnitt des Aufnahmeraumes 3 gebildet mündet zur zugeordneten Stirnfläche 21 des Ventilgehäuses 2 aus. Bedingt durch den ihr zugewandten Verschlussabschnitt 12 des Ventilgliedes 4, der ständig mit dem Ventilgehäuse 2 in Dichtkontakt steht, wird erreicht, dass die Gehäuseausnehmung von den das zu steuernde Druckmedium führenden Ventilkanälen 5 und Ventilräumen 8, 9 fluiddicht abgetrennt ist. Das Handbetätigungsglied 22 ist vorzugsweise deckelartig ausgebildet und zweckmäßigerweise zumindest zum größten Teil seiner Baulänge in die Gehäuseausnehmung 18 eingesetzt, so dass es über das Ventilgehäuse 2 nicht oder nur geringfügig übersteht. Es bildet dabei gleichzeitig einen mechanischen Verschluss des Aufnahmeraumes 3 bzw. der Gehäuseausnehmung 18 und verhindert den Eintritt extern auftretender Fremdpartikel wie Feuchtigkeit, Flüssigkeit oder Schmutz.

Es ist insbesondere vorgesehen, dass das Handbetätigungsglied 22 einen zu seiner Fixierung am Ventilgehäuse 2 dienenden Halteabschnitt 23 aufweist, der bevorzugt ringförmig ausgebildet ist und der bei montiertem Handbetätigungsglied 22 in einen komplementär konturierten Längenabschnitt der Gehäuseausnehmung 18 eintaucht. Um auf separate Dichtungen verzichten zu können, besteht der Halteabschnitt 23 aus Material mit gummielastischen Eigenschaften, wobei er mit zumindest geringfügigem Preßsitz in der Gehäuseausnehmung 18 einsitzt, so dass die gewünschte Abdichtung erreicht wird.

Zusätzlich kann der Halteabschnitt 23 am Außenumfang zumindest einmal abgestuft sein, so dass sich eine ringförmig umlaufende Haltestufe 24 ergibt, die eine Abstufung der Gehäuseausnehmung 18 hintergreift, so dass sich auch eine formschlüssige Verankerung einstellt.

Des Weiteren verfügt das Handbetätigungsglied 22 über einen beispielsweise stößel- oder scheibenartig ausgebildeten Betätigungsabschnitt 25, der sich im zentralen Bereich des Handbetätigungsgliedes 22 befindet, wobei er vom Halteabschnitt 23 koaxial umschlossen wird. Er steht über einen eine federelastische Verbindung definierenden Verbindungsabschnitt 26 mit dem Halteabschnitt 23 in Verbindung, wobei die elastische Verbindung so ausgeführt ist, dass der Betätigungsabschnitt 25 durch manuell aufgebrachte Stellkräfte relativ zum Halteabschnitt 23 in Richtung der Längsachse 27 des Handbetätigungsgliedes 22 verlagerbar ist. Diese Längsachse 27 fällt zweckmäßigerweise mit der Längsachse 15 des zu betätigenden Ventilgliedes 4 zusammen.

Bevorzugt handelt es sich bei der federelastischen Verbindung speziell um eine gummielastische Verbindung, die dadurch realisiert ist, dass der Verbindungsabschnitt 26 aus Material mit gummielastischen Eigenschaften besteht, insbesondere aus einem geeigneten Elastomermaterial oder aus Gummi.

Bei nicht aktivierter Handbetätigungseinrichtung 17 ergibt sich der in Figur 1 dargestellt Grundzustand, wobei der Betätigungsabschnitt 25 ungeachtet der Schaltstellung des Ventilgliedes 4 mit axialem Abstand zum Ventilglied 4 angeordnet ist und zumindest größtenteils in den vom Halteabschnitt 23 umgrenzten Querschnitt eingetaucht sein kann. Um eine Notoder Hilfsbetätigung auszulösen, wird auf die von der Gehäuseausnehmung 18 wegweisende Außenseite des Handbetätigungsgliedes 22 manuell eine Betätigungskraft F aufgebracht, und zwar vorzugsweise auf die Außenfläche 28 des Betätigungsabschnittes 25. Dies kann unmittelbar mit dem Finger einer Hand oder, wie in Figur 1 strichpunktiert angedeutet, mit Hilfe eines in der Hand gehaltenen manuellen Drückwerkzeuges 32 geschehen, beispielsweise einem Betätigungsstift.

Durch die Beaufschlagung verlagert sich der Betätigungsabschnitt 25 relativ zum Halteabschnitt 23 in Richtung zum Ventilglied 4, das er folglich beaufschlagt und vor sich herschiebt. Auf diese Weise ist es möglich, die Schaltstellung des Ventilgliedes 4 zu wechseln. Die sich bei aktivierter Handbetätigungseinrichtung 17 einstellenden Gegebenheiten sind in Figur 1 zur Erläuterung strichpunktiert angedeutet.

Beim Verlagern des Betätigungsabschnittes 25 findet insbesondere im Bereich des Verbindungsabschnittes 26 eine elastische Verformung statt, wobei sich der Verbindungsabschnitt 26 längen kann, so dass sich eine zwischen dem Halteabschnitt 23 und dem Betätigungsabschnitt 25 wirksame Rückstellkraft einstellt. Diese bewirkt, dass ohne zusätzliche mechanische Federeinrichtung ein selbsttätiges Rückstellen des Betätigungsabschnittes 25 in die Grundstellung stattfindet, wenn die Betätigungskraft F weggenommen wird.

Besonders vorteilhaft ist es, den Verbindungsabschnitt 26 so auszuführen, dass er die Gestalt eines Kegelmantels hat und relativ dünnwandig ist. Mit seinem Endabschnitt größeren Durchmessers ist er am nach außen weisenden Endbereich des Halteabschnittes 23 fixiert, während sein Endabschnitt geringeren Durchmessers ins Innere der Gehäuseausnehmung 18 weist und am Betätigungsabschnitt 25 angreift. Auf diese Weise begrenzt der Verbindungsabschnitt 26 eine zur Außenseite des Handbetätigungsgliedes 22 hin offene trichterähnliche Vertiefung 33, die ein zentriertes Ansetzen eines Drückwerkzeuges 32 an der zu beaufschlagenden Außenfläche 28 des Betätigungsabschnittes 25 begünstigt.

Bei der besonders kostengünstigen Bauform des Ausführungsbeispiels ist das Handbetätigungsglied 22 insgesamt als einstückiger Körper ausgebildet, der durchweg aus gummielastischem Material besteht. Dabei kann ein einziges Material vorgesehen sein, oder auch eine Mehrkomponentenausführung. Das Handbetätigungsglied 22 lässt sich auf diese Weise sehr einfach und kostengünstig als Spritzgußteil herstellen.

Obgleich die Gehäuseausnehmung 18 von den druckführenden Zonen des Ventils 1 abgeschirmt ist, kann nicht ausgeschlossen werden, dass durch Leckage Druckmedium aus einem der angrenzenden Ventilkanäle oder Ventilräume in die Gehäuseausnehmung 18 eintritt. Daraus könnte ein Überdruck entstehen, der stirnseitig auf das Ventilglied 4 einwirkt und dessen Schaltfunktion beeinträchtigt. Zur Vermeidung einer solchen Problematik ist das Handbetätigungsglied 22 direkt mit Entlüftungsmitteln 34 ausgestattet, die zur Vermeidung eines in der Gehäuseausnehmung 18 leckagebedingt auftretenden Überdruckaufbaus eine Luftströmung von der der Gehäuseausnehmung 18 zugeordneten Innenseite des Handbetätigungsgliedes 22 zu dessen Außenseite und somit zur Atmosphäre ermöglichen. Diese Entlüftungsmittel 34 sind dabei gleichzeitig in einer Art und Weise ausgeführt, dass sie in der Gegenrichtung, also ausgehend von der Atmosphäre zu der dem Ventilglied 4 zugewandten Innenseite des Handbetätigungsgliedes 22, ein Eindringen nicht-gasförmiger Fremdpartikel, also beispielsweise Schmutzund Flüssigkeitspartikel, verhindern. Dadurch wird zum einen ein Überdruckaufbau in dem vom Handbetätigungsglied 22 abgeschirmten Innenbereich des Ventils 1 verhindert und zum anderen wird dieser Innenbereich vor Verunreinigungen von außen geschützt, um beispielsweise die Schutzklasse IP 65 einhalten zu können.

Es wäre möglich, als Entlüftungsmittel 34 ein feinporiges Material heranzuziehen, das in das Handbetätigungsglied 22 integriert ist, beispielsweise unmittelbar in den Betätigungsabschnitt 25. Eine solche Variante ist in Figur 2 strichpunktiert angedeutet. Als Entlüftungsmittel könnte hier beispielsweise ein Sintermaterial Verwendung finden.

Bei dem Ausführungsbeispiel gemäß Figuren 1 bis 3 sind die Entlüftungsmittel 34 von einem Rückschlagventil 35 gebildet, das am Handbetätigungsglied 22 vorgesehen ist. Prinzipiell könnten auch mehrere parallel geschaltete Rückschlagventile vorgesehen werden. Dieses Rückschlagventil 35 ist so ausgelegt, dass bei einem Druckgleichgewicht zwischen der Außenseite und der Innenseite die Schließstellung gemäß Figur 1 einnimmt und in eine Offenstellung gemäß Figur 2 gelangt, wenn der Druck an der Innenseite des Handbetätigungsgliedes 22 größer ist als der an der Außenseite anstehende Atmosphärendruck. Auf diese Weise ist eine überdruckbedingte Luftströmung von der Innenseite zur Außenseite möglich, in der Gegenrichtung jedoch verhindert. Mit anderen Worten öffnet das Rückschlagventil 35 nur, wenn ein Überdruck im Begriff ist, sich an der Innenseite aufzubauen, so dass unter allen Umständen ein Eintreten von jeglichen Medien in die Gehäuseausnehmung 18 ausgeschlossen wird.

Zwar wäre es prinzipiell möglich, das Rückschlagventil 35 als separate Komponente des Handbetätigungsgliedes 22 auszuführen. Bei der besonders kostengünstigen Bauform des Ausführungsbeispiels hingegen ist das Rückschlagventil 35 ein einstückiger Bestandteil des Handbetätigungsgliedes 22. Letzteres ist mit einer axial durchgehenden Durchbrechung 36 versehen, die von im Schließzustand dicht aneinander anliegenden Dichtflächen 37a, 37b begrenzt ist, welche sich bei im Bereich der Innenseite auftretendem Überdruck zur Freigabe der Durchbrechung 36 auseinander spreizen bzw. voneinander entfernen können (Figur 2) und einen Luftaustritt gemäß Pfeilen 39 ermöglichen.

Die Durchbrechung 36 des Rückschlagventils 35 ist zweckmäßigerweise schlitzartig ausgebildet, wobei gemäß Figur 3 eine bogenartige Schlitz-Längserstreckung vorgesehen sein kann, deren Krümmungszentrum auf der Längsachse 27 des Handbetätigungsgliedes 22 liegt.

Um das Öffnen der Durchbrechung 36 bei an der Innenseite anstehendem Überdruck zu gewährleisten, ist das Handbetätigungsglied 22 zweckmäßigerweise so ausgebildet, dass die sich an die beiden Dichtflächen 37a, 37b anschließenden Innenflächen 38a, 38b an der Innenseite des Handbetätigungsgliedes 22 in einem spitzen Winkel geneigt zueinander verlaufen. Auf diese Weise ist gewährleistet, dass die auftretenden Druckkräfte die die Innenflächen 38a, 38b aufweisenden Bereiche des Handbetätigungsgliedes 22 und somit auch die Dichtflächen 37a, 37b auseinander drücken können. Es versteht sich, dass jede andere Innenflächengestaltung ebenfalls möglich ist, die diesen Effekt gewährleistet.

Die Außenflächen des Handbetätigungsgliedes 22 im Bereich der Durchbrechung 36 sind zweckmäßigerweise unter entgegengesetztem Gesichtspunkt gestaltet. Hier würde ein Überdruck ein verstärktes Zusammenpressen der Dichtflächen 37a, 37b bewirken.

Besonders einfach lassen sich die vorerwähnten Gegebenheiten dadurch realisieren, dass die Durchbrechung 36 und somit das Rückschlagventil 35 wie abgebildet im Übergangsbereich zwischen dem Verbindungsabschnitt 26 und dem Halteabschnitt 23 des Handbetätigungsgliedes 22 plaziert wird.

## Patentansprüche

1. Handbetätigungseinrichtung zur manuellen Not- und/oder Hilfsbetätigung eines üblicherweise elektrisch oder pneumatisch betätigbaren Ventils, mit einem im gebrauchsbereiten Zustand im Bereich einer Gehäuseausnehmung (18) des Ventils (1) unter Abdichtung derart fixierten Handbetätigungsglied (22), dass seine Innenseite ins Innere der Gehäuseausnehmung (18) weist und seine Außenseite zum Aufbringen einer manuellen Betätigungskraft (F) zugänglich ist, **dadurch gekennzeichnet, dass** das Handbetätigungsglied (22) mit Entlüftungsmitteln (34) versehen ist, die zur Vermeidung eines in der Gehäuseausnehmung (18) leckagebedingt auftretenden Überdruckaufbaues eine Luftströmung von der Innenseite zur Außenseite ermöglichen und die in der Gegenrichtung das Eindringen nicht-gasförmiger Fremdpartikel verhindern.

2. Handbetätigungseinrichtung nach Anspruch 1, **dadurch gekennzeichnet, dass** das Handbetätigungsglied (22) einen zur Fixierung am Ventil (1) dienenden Halteabschnitt (23) und einen relativ zum Halteabschnitt (23) manuell bewegbaren Betätigungsabschnitt (25) aufweist, wobei zwischen dem Halteabschnitt (23) und dem Betätigungsabschnitt (25) eine federelastische Verbindung vorgesehen ist.

3. Handbetätigungseinrichtung nach Anspruch 2, **dadurch gekennzeichnet, dass** der Halteabschnitt (23) ringförmig ausgebildet ist und den zentral plazierten Betätigungsabschnitt (25) koaxial umschließt, wobei koaxial dazwischen ein eine zur Außenseite hin offene trichterähnliche Vertiefung begrenzender federelastischer Verbindungsabschnitt (26) vorgesehen ist.

4. Handbetätigungseinrichtung nach Anspruch 2 oder 3, **dadurch gekennzeichnet, dass** die federelastische Verbindung als gummielastische Verbindung ausgebildet ist.

5. Handbetätigungseinrichtung nach Anspruch 4, **dadurch gekennzeichnet, dass** das Handbetätigungsglied (22) zumindest in dem die gummielastische Verbindung definierenden Verbindungsabschnitt (26) aus Material mit gummielastischen Eigenschaften besteht, insbesondere aus einem Elastomermaterial oder aus Gummi.

6. Handbetätigungseinrichtung nach einem der Ansprüche 1 bis 5, **dadurch gekennzeichnet, dass** das Handbetätigungsglied (22) als aus gummielastischem Material bestehender und vorzugsweise einstückiger Körper ausgebildet ist.

7. Handbetätigungseinrichtung nach einem der Ansprüche 1 bis 6, **dadurch gekennzeichnet, dass** das Handbetätigungsglied (22) im Bereich des Außenumfanges einen aus gummielastischem Material bestehenden ringförmigen Halteabschnitt (23) aufweist, der zur Preßsitzbefestigung des Handbetätigungsgliedes (22) in der Gehäuseausnehmung (18) des zugeordneten Ventils (1) vorgesehen ist.

8. Handbetätigungseinrichtung nach Anspruch 7, **dadurch gekennzeichnet, dass** der ringförmige Halteabschnitt (23) am Außenumfang abgestuft ist, so dass mindestens eine ringförmig umlaufende Haltestufe (24) zur formschlüssigen Verankerung in einer ebenfalls abgestuften Gehäuseausnehmung (18) des zugeordneten Ventils (1) vorhanden ist.

9. Handbetätigungseinrichtung nach einem der Ansprüche 1 bis 8, **dadurch gekennzeichnet, dass** die Entlüftungsmittel (34) mindestens ein Rückschlagventil (35) enthalten, das eine überdruckbedingte Luftströmung von der Innenseite zur Außenseite des Handbetätigungsgliedes (22) ermöglicht und in der Gegenrichtung verhindert.

10. Handbetätigungseinrichtung nach Anspruch 9, **dadurch gekennzeichnet, dass** das Handbetätigungsglied (22) zur Bildung eines Rückschlagventils (35) mit einer Durchbrechung (36) versehen ist, die von dicht aneinander anliegenden Dichtflächen begrenzt ist, welche sich bei im Bereich der Innenseite auftretendem Überdruck zur Freigabe der Durchbrechung (36) auseinander spreizen können.

11. Handbetätigungseinrichtung nach Anspruch 10, **dadurch gekennzeichnet, dass** das Rückschlagventil (35) in einem gummielastischen Materialbereich des Handbetätigungsgliedes (22) ausgebildet und vorzugsweise ein einstückiger Bestandteil des Handbetätigungsgliedes (22) ist.

12. Handbetätigungseinrichtung nach Anspruch 11, **dadurch gekennzeichnet, dass** das Handbetätigungsglied (22) zur Bildung des Rückschlagventils (35) in einem gummielastischen Materialbereich geschlitzt ist.

13. Handbetätigungseinrichtung nach einem der Ansprüche 1 bis 8, **dadurch gekennzeichnet, dass** die Entlüftungsmittel (34) aus feinporigem Material bestehen, insbesondere aus Sintermaterial.

14. Handbetätigungseinrichtung nach einem der Ansprüche 1 bis 13, **dadurch gekennzeichnet, dass** das Handbetätigungsglied (22) deckelartig ausgebildet ist.

15. Handbetätigungseinrichtung nach einem der Ansprüche 1 bis 14, **dadurch gekennzeichnet, dass** die Gehäuseausnehmung (18) des Ventils (1), der das Handbetätigungsglied (22) im gebrauchsbereiten Zustand zugeordnet ist, von den das zu steuernde Druckmedium führenden Ventilkanälen und/oder Ventilräumen (5, 8, 9) abgetrennt ist, wobei sie insbesondere von einem axialen Endabschnitt eines ein bewegliches Ventilglied (4) enthaltenden Aufnahmeraumes (3) des betreffenden Ventils (1) gebildet ist.

## Claims

1. Manual actuating device for the manual emergency and/or auxiliary control of a generally electrically or pneumatically operated valve, with a manual actuating element (22) so located in the area of a housing recess (18) of the valve (1) in the in the ready-for-use state while forming a seal, that its inside points towards the interior of the housing recess (18) while its outside is accessible for the application of a manual actuating force (F), **characterised in that** the manual actuating element (22) is provided with venting means (34) which, to avoid a build-up of excess pressure due to leakage in the housing recess (18), allow an airflow from the inside towards the outside and prevent the entry of non-gaseous foreign particles in the opposite direction.

2. Manual actuating device according to claim 1, **characterised in that** the manual actuating element (22) comprises a retaining section (23) for location on the valve (1) and an actuating section (25) manually movable relative to the retaining section (23), with a spring-elastic connection being provided between the retaining section (23) and the actuating section (25).

3. Manual actuating device according to claim 2, **characterised in that** the retaining section (23) is annular and coaxially surrounds the centrally placed actuating section (25), with a spring-elastic connecting section (26) bounding a funnel-shaped cavity open towards the outside being provided coaxially in between.

4. Manual actuating device according to claim 2 or 3, **characterised in that** the spring-elastic connection is designed as a rubber-elastic connection.

5. Manual actuating device according to claim 4, **characterised in that** the manual actuating element (22) is made of a material with rubber-elastic properties, in particular of an elastomer or of rubber, at least in the connecting section (26) defining the rubber-elastic connection.

6. Manual actuating device according to any of claims 1 to 5, **characterised in that** the manual actuating element (22) is designed as a preferably single-piece body made of a rubber-elastic material.

7. Manual actuating device according to any of claims 1 to 6, **characterised in that** the manual actuating element (22) features, in the area of its outer circumference, an annular retaining section (23) made of a rubber-elastic material provided for press-fitting the manual actuating element (22) into the housing recess (18) of the associated valve (1).

8. Manual actuating device according to claim 7, **characterised in that** the annular retaining section (23) is stepped at its outer circumference, so that there is at least one continuous annular retaining step (24) for positive anchorage in a likewise stepped housing recess (18) of the associated valve (1).

9. Manual actuating device according to any of claims 1 to 8, **characterised in that** the venting means (34) comprise al least one check valve (35) allowing an airflow caused by excess pressure from the inside towards the outside of the manual actuating element (22) and preventing airflow in the opposite direction.

10. Manual actuating device according to claim 9, **characterised in that** the manual actuating element (22) is, for the provision of a check valve (35), provided with an opening (36) bounded by tight-fitting sealing surfaces capable of spreading apart to release the opening (36) if excess pressure builds up in the interior.

11. Manual actuating device according to claim 10, **characterised in that** the check valve (35) is located in a rubber-elastic material area of the manual actuating element (22) and preferably forms an integral part of the manual actuating element (22).

12. Manual actuating device according to claim 11, **characterised in that** the manual actuating element (22) is slotted in a rubber-elastic material area to provide the check valve (35).

13. Manual actuating device according to any of claims 1 to 8, **characterised in that** the venting means (34) are made of a fine pored material, in particular a sintered material.

14. Manual actuating device according to any of claims 1 to 13, **characterised in that** the manual actuating element (22) is designed like a cover.

15. Manual actuating device according to any of claims 1 to 14, **characterised in that** the housing recess (18) of the valve (1), to which the manual actuating element (22) is assigned in the ready-to-use state, is separated from the valve passages and/or valve chambers (5, 8,9), being in particular represented by an axial end section of a location chamber (3) of the valve (1) containing a movable valve member (4).

## Revendications

1. Dispositif d'actionnement manuel pour l'actionnement manuel d'urgence et/ou de secours d'une soupape actionnable habituellement électriquement ou pneumatiquement, comportant un organe d'actionnement manuel (22) fixé, avec étanchéité, dans l'état de veille, dans la zone d'un évidement (18) de la cage de la soupape (1), de manière que son côté intérieur soit dirigé vers l'intérieur de l'évidement (18) de la cage et son côté extérieur soit accessible pour appliquer une force d'actionnement (F) manuelle, **caractérisé en ce que** l'organe d'actionnement manuel (22) est pourvu de moyens de purge d'air (34) qui, pour éviter la constitution d'une surpression, se manifestant à la suite d'une fuite, dans l'évidement (18) de la cage, permettent un écoulement de l'air du côté intérieur vers le côté extérieur, et empêchent, en sens contraire, la pénétration de particules étrangères non gazeuses.

2. Dispositif d'actionnement manuel selon la revendication 1, **caractérisé en ce que** l'organe d'actionnement manuel (22) comporte un tronçon de retenue (23) servant à la fixation sur la soupape (1), et un tronçon d'actionnement (25) déplaçable manuellement par rapport au tronçon de retenue (23), une liaison présentant l'élasticité d'un ressort étant prévue entre le tronçon de retenue (23) et le tronçon d'actionnement (25).

3. Dispositif d'actionnement manuel selon la revendication 2, **caractérisé en ce que** le tronçon de retenue (23) est de forme annulaire et entoure coaxialement le tronçon d'actionnement (25) placé au centre, un tronçon de liaison (26) présentant l'élasticité d'un ressort et délimitant un renfoncement de type cône, ouvert vers le côté extérieur, étant prévu coaxialement entre lesdits tronçons.

4. Dispositif d'actionnement manuel selon la revendication 2 ou 3, **caractérisé en ce que** la liaison présentant l'élasticité d'un ressort est réalisée comme une liaison présentant l'élasticité du caoutchouc.

5. Dispositif d'actionnement manuel selon la revendication 4, **caractérisé en ce que** l'organe d'actionnement manuel (22) est constitué, au moins dans le tronçon de liaison (26) définissant la liaison présentant l'élasticité du caoutchouc, en un matériau présentant les propriétés d'élasticité du caoutchouc, en particulier en un matériau élastomère ou en caoutchouc.

6. Dispositif d'actionnement manuel selon l'une des revendications 1 à 5, **caractérisé en ce que** l'organe d'actionnement manuel (22) est réalisé comme un corps en matériau présentant l'élasticité du caoutchouc et de préférence d'une seule pièce.

7. Dispositif d'actionnement manuel selon l'une des revendications 1 à 6, **caractérisé en ce que** l'organe d'actionnement manuel (22) comporte, dans la zone de son pourtour extérieur, un tronçon de retenue (23) de forme annulaire constitué d'un matériau présentant l'élasticité du caoutchouc, qui est prévu pour la fixation à ajustement serré de l'organe d'actionnement manuel (22) dans l'évidement (18) de la cage de la soupape (1) associée.

8. Dispositif d'actionnement manuel selon la revendication 7, **caractérisé en ce que** le tronçon de retenue (23) de forme annulaire est étagé sur son pourtour extérieur, de manière qu'il existe au moins un gradin de retenue périphérique (24) de forme annulaire pour l'ancrage par complémentarité de formes dans un évidement (18) également étagé de la cage de la soupape (1) associée.

9. Dispositif d'actionnement manuel selon l'une des revendications 1 à 8, **caractérisé en ce que** les moyens de purge d'air (34) contiennent au moins un clapet de non-retour (35) qui permet un écoulement de l'air, dû à la surpression, du côté intérieur vers le côté extérieur de l'organe d'actionnement manuel (22), et l'empêche dans le sens opposé.

10. Dispositif d'actionnement manuel selon la revendication 9, **caractérisé en ce que** l'organe d'actionnement manuel (22) est pourvu, pour former un clapet de non-retour (35), d'un ajour (36) qui est délimité par des surfaces d'étanchéité s'appliquant de manière étanche l'une contre l'autre et qui peuvent s'écarter l'une de l'autre, pour dégager l'ajour (36), lorsqu'une surpression se manifeste dans la zone du côté intérieur.

11. Dispositif d'actionnement manuel selon la revendication 10, **caractérisé en ce que** le clapet de non-retour (35) est réalisé dans une zone présentant l'élasticité du caoutchouc du matériau de l'organe d'actionnement manuel (22) et, de préférence, fait partie intégrante d'une seule pièce de l'organe d'actionnement manuel (22).

12. Dispositif d'actionnement manuel selon la revendication 11, **caractérisé en ce que** l'organe d'actionnement manuel (22) est fendu dans une zone du matériau présentant l'élasticité du caoutchouc, pour former le clapet de non-retour (35).

13. Dispositif d'actionnement manuel selon l'une des revendications 1 à 8, **caractérisé en ce que** les moyens de purge d'air (34) sont constitués d'un matériau à pores fins, en particulier d'un matériau fritté.

14. Dispositif d'actionnement manuel selon l'une des revendications 1 à 13, **caractérisé en ce que** l'organe d'actionnement manuel (22) est réalisé à la manière d'un couvercle.

15. Dispositif d'actionnement manuel selon l'une des revendications 1 à 14, **caractérisé en ce que** l'évidement (18) de la cage de la soupape (1), auquel est associé l'organe d'actionnement manuel (22) dans l'état de veille, est séparé des canaux de soupape guidant le fluide sous pression à commander et/ou des chambres de soupape (5, 8, 9), et est formé en particulier par un tronçon terminal axial d'une chambre de réception (3), contenant un organe d'obturation (4) mobile, de la soupape (1) concernée.
